(19) Europäisches Patentamt
European Patent Office
Office européen des brevets

(11) EP 3 227 951 B1

(12) EUROPEAN PATENT SPECIFICATION

(45) Date of publication and mention of the grant of the patent:
**28.08.2019 Bulletin 2019/35**

(21) Application number: **15865518.3**

(22) Date of filing: **01.12.2015**

(51) Int Cl.:
***H01M 10/054*** (2010.01) ***H01M 4/38*** (2006.01)
***H01M 4/13*** (2010.01) ***H01M 4/66*** (2006.01)
***H01M 4/58*** (2010.01) ***H01M 10/0562*** (2010.01)
***H01M 10/39*** (2006.01) ***H01M 4/70*** (2006.01)

(86) International application number:
**PCT/US2015/063244**

(87) International publication number:
**WO 2016/089902 (09.06.2016 Gazette 2016/23)**

(54) **SODIUM-HALOGEN SECONDARY CELL**

NATRIUMHALOGEN-SEKUNDÄRZELLE

CELLULE ÉLECTROCHIMIQUE AU SODIUM-HALOGÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.12.2014 US 201462087507 P**

(43) Date of publication of application:
**11.10.2017 Bulletin 2017/41**

(73) Proprietor: **Field Upgrading USA, Inc.**
**Broomfield, CO 80020 (US)**

(72) Inventors:
- **BHAVARAJU, Sai**
**West Jordan, Utah 84088 (US)**
- **ECCLESTON, Alexis**
**Midvale, Utah 84047 (US)**
- **ROBINS, Mathew**
**Saratoga Springs, Utah 84045 (US)**

(74) Representative: **HGF Limited**
**1 City Walk**
**Leeds LS11 9DX (GB)**

(56) References cited:
**WO-A1-2013/154349**
**FR-A5- 2 115 522**
**US-A- 3 632 448**
**US-A- 3 877 984**
**US-A- 4 546 055**
**US-A1- 2011 104 526**
**US-A1- 2012 015 256**
**US-A1- 2013 052 525**
**US-A1- 2013 196 224**
**US-A1- 2014 030 571**
**US-A1- 2014 065 456**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 227 951 B1

## Description

## TECHNICAL FIELD

The disclosed invention relates to an intermediate temperature, sodium - halogen secondary cell (or rechargeable battery) with a sodium ion conductive electrolyte membrane and a positive electrolyte that comprises one or more sodium haloaluminate salts and a sodium halide. In some disclosed embodiments, the battery system utilizes a molten eutectic mixture of sodium haloaluminate salts having a relatively low melting point.

## BACKGROUND

Batteries are known devices that are used to store and release electrical energy for a variety of uses. In order to produce electrical energy, batteries typically convert chemical energy directly into electrical energy. Generally, a single battery includes one or more galvanic cells, wherein each of the cells is made of two half-cells that arc electrically isolated except through an external circuit. During discharge, electrochemical reduction occurs at the cell's positive electrode, while electrochemical oxidation occurs at the cell's negative electrode. While the positive electrode and the negative electrode in the cell do not physically touch each other, they arc generally chemically connected by at least one (or more) ionically conductive and electrically insulative electrolytes, which can either be in a solid state, a liquid state, or in a combination of such states. When an external circuit, or a load, is connected to a terminal that is connected to the negative electrode and to a terminal that is connected to the positive electrode, the battery drives electrons through the external circuit, while ions migrate through the electrolyte.

Batteries can be classified in a variety of manners. For example, batteries that are completely discharged only once arc often referred to as primary batteries or primary cells. In contrast, batteries that can be discharged and recharged more than once are often referred to as secondary batteries or secondary cells. The ability of a cell or battery to be charged and discharged multiple times depends on the Faradaic efficiency of each charge and discharge cycle.

While rechargeable batteries based on sodium can comprise a variety of materials and designs, most, if not all, sodium batteries that require a high Faradaic efficiency employ a solid primary electrolyte separator, such as a solid ceramic primary electrolyte membrane. The principal advantage of using a solid ceramic primary electrolyte membrane is that the Faradaic efficiency of the resulting cell approaches 100%. Indeed, in almost all other cell designs, electrode solutions in the cell are able to intermix over time and, thereby, cause a drop in Faradaic cfficicncy and loss of battery capacity.

The primary electrolyte separators used in sodium batteries that require a high Faradaic efficiency often consist of ionically conductive polymers, porous materials infiltrated with ionically conductive liquids or gels, or dense ceramics. In this regard, many rechargeable sodium batteries that are presently available for commercial applications comprise a molten sodium metal negative electrode, a sodium β"-alumina ceramic electrolyte separator, and a molten positive electrode, which may include a composite of molten sulfur and carbon (called a sodium/sulfur cell). Because these conventional high temperature sodium-based rechargeable batteries have relatively high specific energy densities and only modest power densities, such rechargeable batteries are typically used in certain specialized applications that require high specific energy densities where high power densities arc typically not encountered, such as in stationary storage and uninterruptable power supplies.

Despite the beneficial characteristics associated with some conventional sodium-based rechargeable batteries, such batteries may have significant shortcomings. In one example, because the sodium β"-alumina ceramic electrolyte separator is typically more conductive and is better wetted by molten sodium at a temperature in excess of about 270° C and/or because the molten positive electrode typically requires relatively high temperatures (*e.g.,* temperatures above about 170° or 180° C) to remain molten, many conventional sodium-based rechargeable batteries operate at temperatures higher than about 270° C and arc subject to significant thermal management problems and thermal sealing issues. For example, some sodium-based rechargeable batteries may have difficulty dissipating heat from the batteries or maintaining the negative electrode and the positive electrode at the relatively high operating temperatures. In another example, the relatively high operating temperatures of some sodium-based batteries can create significant safety issues. In still another example, the relatively high operating temperatures of some sodium-based batteries require their components to be resistant to, and operable at, such high temperatures. Accordingly, such components can be relatively expensive. In yet another example, because it may require a relatively large amount of energy to heat some conventional sodium-based batteries to the relatively high operating temperatures, such batteries can be expensive to operate and energy inefficient.

Thus, while sodium-based rechargeable batteries are available, challenges with such batteries also exist, including those previously mentioned. Accordingly, it would be an improvement in the art to augment or even replace certain conventional sodium-based rechargeable batteries with other sodium-based rechargeable batteries that operate effectively at intermediate temperatures.

FR 2115522 discloses a non-aqueous rechargeable cell operating at 110-200, preferably 150, degrees C,

wherein the cell comprises (Na/beta $Al_2O_3$(Na)/NaI(Br, Cl).$AlCl_3$) discharged or (Na/beta $Al_2O_3$(Na)/$I_2$($Br_2$, $Cl_2$) plus NaCl(Br).$AlCl_3$) when charged. Iodine is the preferred halogen and the $AlCl_3$ forms low melting complexes and suppresses the formation of polyhalides such as $NaI_3$. The mixed halides are contained in carbon felt. The operating temperature is lower than sodium/sulphur cells (300 degrees C). The active material for the positive compartment is prepared by mixing the solid halides, melting, homogenising, freezing and grinding.

US 4546055 discloses an electrochemical cell that is provided with a molten sodium anode and a molten sodium aluminium halide salt electrolyte. The cathode comprises $FeCl_2$, $NiCl_2$, $CoCl_2$ or $CrCl_2$ as active cathode substance dispersed in an electronically conductive electrolyte-permeable matrix which is impregnated by the electrolyte. Between the anode and the electrolyte, and isolating them from each other, is a solid conductor of sodium ions or a micromolecular sieve which contains sodium sorbed therein. The proportions of sodium and aluminium ions in the electrolyte are selected so that the solubility of the active cathode substance in the electrolyte is at or near its minimum.

US 2014/030571 discloses a secondary cell having a negative electrode compartment and a positive electrode compartment, which are separated by an alkali ion conductive electrolyte membrane. An alkali metal negative electrode disposed in the negative electrode compartment oxidizes to release alkali ions as the cell discharges and reduces the alkali ions to alkali metal during recharge. The positive electrode compartment includes a positive electrode contacting a positive electrode solution that includes an alkali metal compound and a metal halide. The alkali metal compound can be selected from an alkali halide and an alkali pseudo-halide. During discharge, the metal ion reduces to form metal plating on the positive electrode. As the cell charges, the metal plating oxidizes to strip the metal plating to form metal halide or pseudo halide or corresponding metal complex.

US 3877984 discloses a secondary battery utilizing a molten alkali metal negative reactant, a metal chloride positive reactant, a molten alkali metal chloraluminate electrolyte and a selectively-ionically-conductive separator positioned between the negative and the positive reactants.

## SUMMARY OF THE INVENTION

The present invention provides a sodium-halogen secondary cell, comprising:

- a negative electrode compartment comprising a negative electrode that comprises metallic sodium in molten or solid state, wherein the negative electrode electrochemically oxidizes to release sodium ions during discharge and electrochemically reduces sodium ions to form sodium metal during recharge;
- a positive electrode comprising NaX disposed in a mixed molten positive electrolyte comprising at least two different $NaAlX_4$ salts and is represented by the general formula $NaAlX'_{4-\delta}X''_{\delta}$, where $0 < \delta < 4$, wherein X' and X" are different halogens selected from Cl, Br and I; and
- a sodium ion conductive solid electrolyte membrane that separates the negative electrode from the liquid positive electrode solution;

wherein;

- the overall battery chemistry of the sodium-halogen secondary cell is $2Na + X_2 \leftrightarrow 2Na^+ + 2X^-$ and
- the positive electrode comprises NaX or a mixture of NaX compounds present in a molar ratio to the mixed molten salt positive electrolyte ranging from 1:1 to 3:1 of NaX : $NaAlX'_{4-\delta}X''_{\delta}$.

Examples of sodium-halogen secondary cells are disclosed in Applicant's copending U.S. Patent Application No. 14/019,651, published as U.S. Publication No. 2014/0065456 entitled "Sodium-Halogen Secondary Cell." The disclosed secondary cells include a positive electrode compartment housing a current collector disposed in a liquid positive electrode solution. Some examples of suitable positive electrode solution materials include organic solvents such as dimethyl sulfoxide, NMF (N-methylformamide), and ionic liquids.

The present disclosure provides an improvement to the positive electrode solution of the sodium-halogen secondary cells disclosed in Applicant's copending application. In some disclosed embodiments, the battery system utilizes a molten eutectic mixture of sodium haloaluminate salts having a relatively low melting point.

A sodium ion conductive solid electrolyte separates the negative electrode and the liquid positive electrode solution. In a non-limiting embodiment, the sodium ion conductive solid electrolyte comprises a NaSICON electrolyte material. The NaSICON electrolyte material has high sodium conductivity at cell operating temperatures.

In one non-limiting embodiment, the battery operates at a temperature in the range from 80 °C to 210 °C.

The rechargeable sodium-halogen battery includes a negative electrode comprising metallic sodium in molten or solid state. The positive electrode comprises NaX, where X is a halogen selected from Cl, Br and I. The positive electrode is disposed in a molten salt positive electrolyte comprising a mixture of at least two $AlX_3$ salts that can be represented by the formula $NaAlX'_{4-\delta}$, where $0 < \delta < 4$, wherein X' and X" are different halogens selected from Cl, Br and I.

The mixed molten salt positive electrolyte comprises at least two salts of the general formula $NaAlX'_4$ and $NaAlX''_4$ at various molar ratios, wherein X' and X" are different halogens selected from Cl, Br and I. In one non-limiting embodiment, the molar ratio of $NaAlX'_4$ to $NaAlX''_4$ is in the range of 9:1 to 1:9 with corresponding $\delta$ values of 0.4 to 3.6.

The positive electrode comprises NaX or a mixture of NaX compounds added in a molar ratio to the mixed molten salt positive electrolyte ranging from 1:1 to 3:1 of NaX : $NaAlX'_{4-\delta}X''_{\delta}$. The excess NaX renders the positive electrolyte highly basic. At cell operating temperatures, the positive electrode and mixed molten salt positive electrolyte is a molten liquid or a two phase mixture wherein the mixed molten salt positive electrolyte is predominantly a liquid phase and the NaX or mixture of NaX compounds is a solid phase.

In other embodiments, the positive electrode is disposed in a mixed molten salt positive electrolyte comprising at least three salts that can be represented by the formula where X', X" and X''' are three different halogens selected from Cl, Br, and I, where 0 < 6 < 4, $0 < \varpi < 4$, and $0 < \delta + \varpi < 4$. The mixed molten salt positive electrolyte comprises $NaAlCl_4$, $NaAlBr_4$, and $NaAlI_4$, at various molar ratios.

The disclosed sodium haloaluminate molten salts arc highly conductivc at relatively low temperatures enabling the sodium-halogen battery to be highly efficient and reversible. These features and advantages of the present embodiments will become more fully apparent from the following description and appended claims.

## BRIEF DESCRIPTION OF THE DRAWINGS

In order that the manner in which the above-recited and other features and advantages of the invention are obtained will be readily understood, a more particular description of the invention briefly described above will be rendered by reference to specific embodiments thereof that are illustrated in the appended drawings. Understanding that these drawings depict only typical embodiments of the invention and are not therefore to be considered to be limiting of its scope, the invention will be described and explained with additional specificity and detail through the use of the accompanying drawings in which:

Fig. 1 depicts a schematic diagram of a representative embodiment of a molten sodium-halogen secondary cell, wherein the cell is in the process of being discharged.

Fig. 2 depicts a schematic diagram of a representative embodiment of the molten sodium-halogen secondary cell, wherein the cell is in the process of being recharged.

Fig. 3A depicts one potential reaction, designated Battery Chemistry 1, at the positive current collector.

Fig. 3B depicts another potential reaction, designated Battery Chemistry 2, at the positive current collector.

Fig. 4 is a graph comparing the conductivity of NaI in a molten salt electrolyte and in an organic solvent as a function of temperature.

Figs. 5A and 5B are graphs comparing the oxidation of iodide in a sodium-iodine secondary cell containing NaI in $AlCl_3$ at basic and acidic ratios of NaI:$AlCl_3$.

Fig. 6 is a graph of the current vs. voltage for the operation of the symmetrical cells described in Example 3.

## DETAILED DESCRIPTION

Reference throughout this specification to "one embodiment," "an embodiment," or similar language means that a particular feature, structure, or characteristic described in connection with the embodiment is included in at least one embodiment of the present invention. Thus, appearances of the phrases "in one embodiment," "in an embodiment," "in another embodiment," and similar language throughout this specification may, but do not necessarily, all refer to the same embodiment. Additionally, while the following description refers to several embodiments and examples of the various components and aspects of the described invention, all of the described embodiments and examples are to be considered, in all respects, as illustrative only and not as being limiting in any manner.

Furthermore, the described features, structures, or characteristics of the invention may be combined in any suitable manner in one or more embodiments. In the following description, numerous specific details are provided, such as examples of suitable sodium-based negative electrodes, liquid positive electrode solutions, current collectors, sodium ion conductive electrolyte membranes, etc., to provide a thorough understanding of embodiments of the invention. One having ordinary skill in the relevant art will recognize, however, that the invention may be practiced without one or more of the specific details, or with other methods, components, materials, and so forth. In other embodiments, well-known structures, materials, or operations are not shown or described in detail to avoid obscuring aspects of the invention. The Invention is set out In the appended claims.

As stated above, secondary cells can be discharged and recharged and this specification describes cell arrangements and methods for both states. Although the term "recharging" in its various forms implies a second charging,

one of skill in the art will understand that discussions regarding recharging would be valid for, and applicable to, the first or initial charge, and *vice versa.* Thus, for the purposes of this specification, the terms "recharge," "recharged," and "rechargeable" shall be interchangeable with the terms "charge," "charged," and "chargeable," respectively.

The embodiments according to the Invention provide a sodium-halogen secondary cell, which includes a molten or solid state sodium negative electrode and a sodium halide positive electrode disposed in a molten positive electrolyte that comprises one or more haloaluminatc salts. According to the invention, the secondary cell utilizes as the positive electrolyte a molten eutectic mixture of sodium haloaluminate salts having a relatively low melting point. Although the described cell can comprise any suitable component, Figure 1 shows a representative embodiment in which the sodium secondary cell 10 comprises a negative electrode compartment 15 that includes a sodium metal negative electrode 20 and a positive electrode compartment 25 that comprises a sodium halide positive electrode. The positive electrode includes a current collector 30 disposed in a positive electrolyte 35 comprising one or more molten haloaluminate salts ($AlCl_3$, $AlBr_3$, and $AlI_3$) A sodium ion conductive electrolyte membrane 40 separates the negative electrode from the liquid positive electrode solution and positive electrolyte 35. The sodium ion conductive electrolyte membrane 40 separates a first terminal 45 from a second terminal 50. To provide a better understanding of the described cell 10, a brief description of how the cell functions is provided below. Following this discussion, each of the cell's components shown in Figure 1 is discussed in more detail.

Turning now to the manner in which the sodium secondary cell 10 functions, the cell can function in virtually any suitable manner. In one example, Figure 1 illustrates that as the cell 10 is discharged and electrons ($c^-$) flow from the negative electrode 20 (*e.g.,* via the first terminal 45), sodium is oxidized from the negative electrode 20 to form sodium ions ($Na^+$). Figure 1 shows that these sodium ions arc respectively transported from the sodium negative electrode 20, through the sodium ion conductive membrane 40, and to the positive electrolyte 35.

In a contrasting example. Figure 2 shows that as the secondary cell 10 is recharged and electrons ($c^-$) flow into the sodium negative electrode 20 from an external power source (not shown), such as a recharger, the chemical reactions that occurred when the cell 10 was discharged (as shown in Figure 1) are reversed. Specifically, Figure 2 shows that as the cell 10 is recharged, sodium ions (Na) arc respectively transported from the positive electrolyte 35, through the electrolyte membrane 40, and to the negative electrode 20, where the sodium ions are reduced to form sodium metal (Na).

Referring now to the various components of the cell 10, the cell, as mentioned above comprises a negative electrode compartment 15 and a positive electrode compartment 25. In this regard, the two compartments can be any suitable shape and have any other suitable characteristic that allows the cell 10 to function as intended. By way of example, the negative electrode and the positive electrode compartments can be tubular, rectangular, or be any other suitable shape. Furthermore, the two compartments can have any suitable spatial relationship with respect to each other. For instance, while Figure 2 shows that the negative electrode compartment 15 and the positive electrode compartment 25 can be adjacent to each other, in other embodiments (not shown), one compartment (*e.g.,* the negative electrode compartment) is disposed, at least partially, in the other compartment (*e.g.,* the positive electrode compartment), while the contents of the two compartments remain separated by the electrolyte membrane 40 and any other compartmental walls.

With respect to the negative electrode 20, the cell 10 can comprise any suitable sodium negative electrode 20 that allows the cell 10 to function (*e.g.,* be discharged and recharged) as intended. Some examples of suitable sodium negative electrode materials include, but arc not limited to, a sodium sample that is substantially pure and a sodium alloy comprising any other suitable sodium-containing negative electrode material. In certain embodiments, however, the negative electrode comprises or consists of an amount of sodium that is substantially pure. In such embodiments, because the melting point of pure sodium is around 98° C, the sodium negative electrode will become molten above that temperature.

With respect to the positive current collector 30, the positive electrode compartment 25 can comprise any suitable positive electrode that allows the cell to be charged and discharged as intended. For instance, the positive electrode can comprise virtually any current collector 30 in combination with a halogen, shown generically as "X" in Figs. 1 and 2, in a positive electrolyte 35 comprising at least two sodium haloaluminate salts. The current collector 30 can be disposed in any suitable location in the positive electrode compartment 25 that allows the cell 10 to function as intended.

With respect to the current collector 30, the cell 10 can comprise any suitable current collector that allows the cell to be charged and discharged as intended. For instance, the current collector can comprise virtually any current collector configuration that has been successfully used in a sodium-based rechargeable battery system. In some embodiments, the current collector comprises at least one of wires, felts, foils, plates, parallel plates, tubes, meshes, mesh screens, foams, and/or other suitable current collector configuration. It will be appreciated by those of skill in the art that the foam may include, without limitation, metal foams and carbon foams. Indeed, in some embodiments, the current collector comprises a configuration having a relatively large surface area which may include one or more mesh screens and metal foams.

The current collector 30 can comprise any suitable material that allows the cell 10 to function as intended. In this regard, some non-limiting examples of suitable current collector materials include tungsten, stainless steel, carbon,

molybdenum, titanium, platinum, copper, nickel, zinc, a sodium intercalation material (*e.g.,* $Na_XMnO_2$, etc.), nickel foam, nickel, a sulfur composite, a sulfur halide (*e.g.,* sulfuric chloride), and/or another suitable material. Furthermore, these materials may coexist or exist in combinations. In some embodiments, however, the current collector comprises tungsten, carbon, molybdenum, titanium.

In some non-limiting embodiments, the reactions that may occur at the negative electrode 20, the positive electrode/current collector 30, and the overall reaction as the cell 10 is discharged may occur in at least two steps. These two potential reactions arc shown below and designated Battery Chemistry 1 (shown schematically in Fig. 3A for battery recharge) and Battery Chemistry 2 (shown schematically in Fig. 3B for battery recharge). It has been observed that these reactions may be individual steps of a multi-step reaction, or depending upon the battery conditions, one step may be favored over another step.

Negative electrode $Na \leftrightarrow Na^- + 1e^-$
Positive electrode $X_3^- + 2e^- \leftrightarrow 3X^-$ (Battery Chemistry 1)
Positive electrode $3X_2 + 2e^- \leftrightarrow 2X_3^-$ (Battery Chemistry 2)
Overall $2Na + X_3^- \leftrightarrow 2Na^+ + 3X^-$ (Battery Chemistry 1)
Overall $2Na + 3X_2 \leftrightarrow 2Na^+ + 2X_3^-$ (Battery Chemistry 2)

Where X comprises iodine, bromine, or chlorine.

Where X comprises iodine, the cell 10 may have the following chemical reactions and the following theoretical voltage (V vs. SHE (standard hydrogen electrode)) and theoretical specific energy (Wh/kg):

Negative electrode $Na \leftrightarrow Na^- + 1c$ (-2.71V)
Positive electrode $I_3^- + 2e^- \leftrightarrow 3I^-$ (0.29V, Chemistry 1)
Positive electrode $3I_2 + 2e^- \leftrightarrow 2I_3^-$ (0.74V, Chemistry 2)
Overall $2Na + I_3^- \leftrightarrow 2Na^+ + 3I^-$ (2.8V, Chemistry 1) (388 Wh/kg)
Overall $2Na + 3I_2 \leftrightarrow 2Na' + 2I_3^-$ (3.25V, Chemistry 2) (193 Wh/kg)

Where X is iodine, the charging reactions at the positive electrode may occur in two steps: 1) iodide to triiodide and 2) triiodide to iodine. Similarly, discharging reactions at the positive electrode may occur in two steps: 1) iodine to triiodide and 2) triiodide to iodide. Alternatively, the charging and discharging reactions may occur using the combination of reaction chemistries above.

Where X is bromine, the cell 10 may have the following chemical reactions and the following theoretical voltage (V vs. SHE) and theoretical specific energy (Wh/kg):

Negative electrode $Na \leftrightarrow Na^- + 1e^-$ (-2.71V)
Positive electrode $Br_3^- + 2e^- \leftrightarrow 3Br^-$ (0.82V, Chemistry 1)
Positive electrode $3Br_2 + 2e^- \leftrightarrow 2Br_3^-$ (1.04V, Chemistry 2)
Overall $2Na + Br_3^- \leftrightarrow 2Na^- + 3Br^-$ (3.53V, Chemistry 1) (658 Wh/kg)
Overall $2Na + 3Br_2 \leftrightarrow 2Na^+ + 2Br_3^-$ (3.75V, Chemistry 2) (329 Wh/kg)

The charging reactions at the positive electrode may occur in two steps: 1) bromide to tribromide and 2) tribromide to bromine. Similarly, discharging reactions at the positive electrode may occur in two steps: 1) bromine to tribromide and 2) tribromide to bromide. Alternatively, the charging and discharging reactions may occur using the combination of reaction chemistries above.

It will be appreciated by those of skill in the art that an alternative positive electrode chemistry may include:

Positive electrode $X_2 + 2e^- \leftrightarrow 2X^-$ (Battery Chemistry 3)

With an overall battery chemistry of:

Overall $2Na + X_2 \leftrightarrow 2Na^+ + 2X^-$ (Battery Chemistry 3)

With regards now to the sodium ion conductive electrolyte membrane 40, the membrane can comprise any suitable material that selectively transports sodium ions and permits the cell 10 to function with a positive electrolyte 35. In some embodiments, the electrolyte membrane comprises a NaSICON-type (sodium Super Ion CONductive) material. Where the electrolyte membrane comprises a NaSICON-type material, the NaSICON-type material may comprise any known or novel NaSICON-type material that is suitable for use with the described cell 10. Some suitable examples of NaSICON-type compositions include, but are not limited to, $Na_3Zr_2Si_2PO_{12}$, $Na_{1+x}Si_xZr_2P_{3-x}O_{12}$ (where x is between

about 1.6 and about 2.4), Y-doped NaSICON ($Na_{1-x+y}Zr_{2-y}Y_ySi_xP_{3-x}O_{12}$, $Na_{1-x}Zr_{2-y}Y_y\ Si_xP_{3-x}O_{12-y}$ (where x = 2, y = 0.12)), $Na_{1-x}Zr_2Si_xP_{3-x}O_{12}$ (where x is between about 0 and about 3, and in some cases between about 2 and about 2.5), and Fe-doped NaSICON ($Na_3Zr_2/_3Fe_4/_3P_3O_{12}$). Indeed, in certain embodiments, the NaSICON-type membrane comprises $Na_3Si_2Zr_2PO_{12}$ In other embodiments, the NaSICON-type membrane comprises one or more *NaSELECT*$^x$ materials, produced by Ccramatcc, Inc. in Salt Lake City, Utah.

The positive electrode comprises NaX, where X is a halogen selected from Cl, Br and I. The positive electrode is preferably NaI.

The positive electrode is disposed in a molten salt positive electrolyte comprising $AlX_3$, NaX and $AlX_3$ combine to form $NaAlX_4$ as follows:

$$NaX + AlX_3 \leftrightarrow NaAlX_4$$

According to the invention, the positive electrode is combined with a mixture of at least two $AlX_3$ salts. The combination of positive electrode and positive electrolyte can be represented by the general formula $NaAlX'_{4-\delta}X''_{\delta}$, where $0 < \delta < 4$, wherein X' and X" are different halogens selected from Cl, Br and I.

The mixed molten salt positive electrolyte comprises at least two salts of the general formula $NaAlX'_4$ and $NaAlX''_4$ at various molar ratios, wherein X' and X" arc different halogens selected from Cl, Br and I. In one non-limiting embodiment, the molar ratio of $NaAlX'_4$ to $NaAlX''_4$ is in the range of 9:1 to 1:9 with corresponding $\delta$ values of 0.4 to 3.6.

The positive electrode comprises NaX or a mixture of NaX compounds added in a molar ratio to the mixed molten salt positive electrolyte ranging from 1:1 to 3:1 of NaX : $NaAlX'_{4-\delta}X''_{\delta}$. The excess NaX renders the positive electrolyte highly basic. At cell operating temperatures, the positive electrode and mixed molten salt positive electrolyte is a molten liquid or a two phase mixture wherein the mixed molten salt positive electrolyte is predominantly a liquid phase and the additional NaX or mixture of NaX compounds is a solid phase.

The following Table 1 illustrates some non-limiting combinations of NaX and $AlX_3$ to form $NaAlX_4$.

Table 1

| **NaX \ $AlX_3$** | **$AlCl_3$** | **$AlBr_3$** | **$AlI_3$** |
|---|---|---|---|
| NaCl | $NaAlCl_4$ | $NaAlBr_3Cl$ | $NaAlI_3Cl$ |
| NaBr | $NaAlCl_3Br$ | $NaAlBr_4$ | $NaAlI_3Br$ |
| NaI | $NaAlCl_3I$ | $NaAlBr_3I$ | $NaAlI_4$ |

In other embodiments, the positive electrode is disposed in a mixed molten salt positive electrolyte comprising at least three salts that can be represented by the formula where X', X" and X''' are three different halogens selected from Cl, Br, and I, where $0 < \delta < 4$, $0 < \varpi < 4$, and $0 < \delta + \varpi < 4$. The mixed molten salt positive electrolyte comprises $NaAlCl_4$, $NaAlBr_4$, and $NaAlI_4$, at various molar ratios.

In some embodiments, the positive electrolyte 35 also comprises one or more halogens and/or halides. In this regard, the halogens and halides, as well polyhalides and/or metal halides that form therefrom (e.g., where the current collector 30 comprises a metal, such as copper, nickel, zinc, ctc. (as discussed below)) can perform any suitable function, including, without limitation, acting as the positive electrode as the cell 10 operates. Some examples of suitable halogens include bromine, iodine, and chlorine. Similarly, some examples of suitable halides include bromide ions, polybromidc ions, iodide ions, polyiodide ions, chloride ions, and polychloride ions. While the halogens/halides can be introduced into the positive electrode solution in any suitable manner, in some embodiments, they are added as NaX, wherein X is selected from Br, I, Cl, etc.

With reference now to the terminals 45 and 50, the cell 10 can comprise any suitable terminals that are capable of electrically connecting the cell with an external circuit (not shown), including without limitation, to one or more cells. In this regard, the terminals can comprise any suitable material, be of any suitable shape, and be of any suitable size.

In addition to the aforementioned components, the cell 10 can optionally comprise any other suitable component. By way of non-limiting illustration Figures 1 and 2 show an embodiment in which the cell 10 comprises a heat management system 55, 60. Independent heat management systems may be associated with the negative electrode and positive electrode compartments. Alternatively, a single heat management system may be disposed in only one compartment or to the exterior of the cell 10 generally. In such embodiments, the cell can comprise any suitable type of heat management system that is capable of maintaining the cell within a suitable operating temperature range. Some examples of such heat management systems include, but are not limited to, a heater, a cooler, one or more temperature sensors, and appropriate temperature control circuitry.

The described cell 10 may function at any suitable operating temperature. In other words, as the cell is discharged and/or recharged, the sodium negative electrode and the positive electrolyte may have any suitable temperature. The negative and positive electrode compartments may operate at the same or different temperatures. Indeed, in some embodiments, the cell functions at an intermediate operating temperature in the range from 80 °C to 210 °C. In other embodiments, the cell may function at an intermediate operating temperature in the range from about 110 °C to about 180 °C. In yet another embodiment, the operating temperature of the cell in the range of about 150 °C to about 170 °C.

The following examples are given to illustrate various embodiments within, and aspects of, the scope of the present invention as set out in the appended claims. These are given by way of example only, and it is understood that the following examples are not comprehensive or exhaustive of the many types of embodiments of the present invention that can be prepared in accordance with the present invention.

### Example 1

The conductivity of NaI in a molten salt positive electrolyte $AlCl_3$ was compared to the conductivity of NaI in an organic solvent solution that included N-methyl formamide. The molten salt positive electrolyte had a general formula of $NaAl_xI_yCl_z$. The conductivity of NaI in a molten salt positive elcctrolyte was approximately three times the conductivity of the organic solvent-based electrolyte at 120 °C, as shown in Fig. 4. Cells utilizing a molten salt positive electrolyte will be more energy dense due to higher molarity of NaI. Furthermore, cells utilizing a molten salt positive electrolyte are safer than organic solvent based positive electrolyte solutions because if molten sodium happens to contact the molten salt positive electrolyte, the chemical reaction would only produce non-flammable salts.

### Example 2

A sodium-iodine secondary cell was prepared as described herein containing sodium iodide in molten $AlCl_3$ in a 60:40 NaI:$AlCl_3$ ratio (a "basic" electrolyte). Tungsten wire was used as the positive current collector. NaSICON was used to separate a molten sodium negative electrode from the positive electrode/positive electrolyte. The oxidation of iodide was measured and found to produce two oxidation peaks, consistent with Battery Chemistry 1 and Battery Chemistry 2, described herein. Experimental results arc shown in Fig. 5A. The oxidation peaks were found to be reversible. Additional tests were performed using an "acidic" electrolyte comprising sodium iodide in molten $AlCl_3$ in a 40:60 NaI:$AlCl_3$ ratio. Experimental results are shown in Fig. 5B. The results suggest that the s oxidation peak in the basic electrolyte occurs at a similar potential as the first : oxidation peak in the acidic electrolyte. The reduction peak in acidic electrolyte occur higher potential. This suggests that whether the electrolyte is acidic or basic affec potential of $I_2$ generation.

### Example 3

Three symmetrical sodium-iodine secondary cells were prepared to te reversibility of the oxidation / reduction reactions that occur in the positive electr positive electrolyte. The symmetrical cells were prepared as set forth in Table 2, below:

Table 2

| Cell | Electrode | | Electrolyte | |
|---|---|---|---|---|
| | Outside of tube | Inside of tube | Outside of Tube | Inside of Tube |
| Symmetrical Cell 1 | Graphite felt with tungsten wire | Graphite felt with tungsten wire | 1M $I_2$ in 51:49mol% NaI:$AlCl_3$ | 1M $I_2$ in 51:49mol% NaI:$AlCl_3$ |
| Symmetrical Cell 2 | 0.93g NaI/0.93g C/PTFE around tungsten mesh | Tungsten wire with graphite felt | 60:40mol% NaI:$AlCl_3$ | 0.02475g $I_2$ in 51:49mol% NaI:$AlCl_3$ |
| Symmetrical Cell 3 | Graphite felt with tungsten wire | 0.25" Carbon Rod | 60:40mol% NaI:$AlCl_3$ | 50:50mol% NaI:$AlCl_3$ |

The symmetrical cells were operated as set forth in Table 3, below:

**Table 3**

| Cell | Temperature (°C) | EIS | | Operating Range | | Current Density ($mA/cm^2$) |
|---|---|---|---|---|---|---|
| | | Ohmic (Ω) | System (Ω) | Upper Voltage Limit (V) | Lower Voltage Limit (V) | |
| Symmetrical Cell 1 | 125 | 2.17 | 5.19 | 0.5 | -0.5 | 91 |
| Symmetrical Cell 2 | 125 | 3.60 | 16.40 | 0.5 | -0.5 | 72 |
| Symmetrical Cell 3 | 125 | 5.00 | 6.70 | 0.15 | -0.15 | 20 |

A graph of the current vs. voltage for the operation of the symmetrical cells is shown in Fig. 6. Because there is little or no hysteresis shown in Fig. 6, it may be concluded that the oxidation / reduction reactions that occur in the positive electrode / positive electrolyte arc highly reversible.

## Claims

**1.** A sodium-halogen secondary cell, comprising:

a negative electrode compartment comprising a negative electrode that comprises metallic sodium in molten or solid state, wherein the negative electrode electrochemically oxidizes to release sodium ions during discharge and electrochemically reduces sodium ions to form sodium metal during recharge;
a positive electrode comprising NaX disposed in a mixed molten positive electrolyte comprising at least two different $NaAlX_4$ salts and is represented by the general formula $NaAlX'_{4-6}X''_{\delta}$, where $0 < \delta < 4$, wherein X' and X" are different halogens selected from Cl, Br and I; and
a sodium ion conductive solid electrolyte membrane that separates the negative electrode from the liquid positive electrode solution;
wherein;
the overall battery chemistry of the sodium-halogen secondary cell is $2Na + X_2 \leftrightarrow 2Na^+ + 2X^-$ and
the positive electrode comprises NaX or a mixture of NaX compounds present in a molar ratio to the mixed molten salt positive electrolyte ranging from 1:1 to 3:1 of NaX : $NaAlX'_{4-\delta}X''_{\delta}$.

**2.** The secondary cell of claim 1, wherein the molten salt positive electrolyte comprises three different $NaAlX_4$ salts and is represented by the general formula where X', X" and X"' are three different halogens selected from Cl, Br, and I, where $0 < \delta < 4$, $0 < \varpi < 4$, and $0 < \delta + \varpi < 4$; and
wherein the positive electrode comprises NaX or a mixture of NaX compounds present in a molar ratio to the mixed molten salt positive electrolyte ranging from 1:1 to 3:1 of

$$NaX : NaAlX'_{4-\delta-\varpi}X''_{\delta}X'''_{\varpi}.$$

**3.** The secondary cell of claim 2, wherein the positive electrode and the ωmolten positive electrolyte are in the form of a mixed molten salt comprising at least three salts of the formula $NaAlCl_4$, $NaAlBr_4$, and $NaAlI_4$, at various molar ratios.

4. The secondary cell of any preceding claim, wherein the secondary cell operates at a temperature between 80 °C and 210° C.

5. The secondary cell of any preceding claim, wherein the electrolyte membrane comprises a NaSICON-type material.

6. The secondary cell of claim 1, wherein the additional NaX is present as a solid phase within the positive electrode.

7. The secondary cell of any preceding claim wherein the positive electrode comprises a current collector.

8. The secondary cell of claim 7, wherein the positive electrode comprises a current collector comprising at least one of carbon, tungsten, molybdenum, and titanium.

9. The secondary cell of claim 7 or claim 8, wherein the current collector comprises at least one of wires, felts, foils, plates, parallel plates, tubes, meshes, mesh screens, and foams.

10. The sodium-halogen secondary cell of any preceding claim, comprising:

a negative electrode compartment comprising a negative electrode that comprises metallic sodium in molten state, wherein the negative electrode electrochemically oxidizes to release sodium ions during discharge and electrochemically reduces sodium ions to form sodium metal during recharge;
a positive electrode comprising NaI disposed in a mixed molten positive electrolyte comprising at least two different $NaAlX_4$ salts and is represented by the general formula $NaAlX'_{4-\delta}X''_{\delta}$, where $0 < \delta < 4$, wherein X' and X" are different halogens selected from Cl, Br and I; and
a sodium ion conductive solid electrolyte membrane that separates the negative electrode from the liquid positive electrode solution;
wherein the overall battery chemistry of the sodium-halogen secondary cell is $2Na + 12 \leftrightarrow 2Na^+ + 2I^-$; and
the positive electrode comprises NaI present in a molar ratio to the mixed molten salt positive electrolyte ranging from 1:1 to 3:1 of NaI : $NaAlX'_{4-\delta}X''_{\delta}$.

## Patentansprüche

1. Natrium-Halogen-Sekundärzelle, umfassend:

eine Kammer für eine negative Elektrode, umfassend eine negative Elektrode, die metallisches Natrium in geschmolzenem oder festem Zustand umfasst, wobei die negative Elektrode elektrochemisch oxidiert, um Natriumionen während der Entladung freizusetzen, und Natriumionen elektrochemisch reduziert, um Natriummetall während der Aufladung zu bilden;
eine positive Elektrode, umfassend NaX, welches in einem gemischten geschmolzenen positiven Elektrolyt angeordnet ist, umfassend mindestens zwei verschiedene $NaAlX_4$-Salze, und dargestellt durch die allgemeine Formel $NaAlX'_{4-\delta}X''_{\delta}$, wobei $0 < \delta < 4$, wobei X' und X" unterschiedliche Halogene sind, ausgewählt aus Cl, Br und I;
und eine Natriumion-leitende feste Elektrolytmembran, die die negative Elektrode von der flüssigen Lösung der positiven Elektrode trennt;

wobei Folgendes gilt:

die gesamten Batteriebestandteile der Natrium-Halogen-Sekundärzelle $2Na + X_2 \leftrightarrow 2Na^+ + 2X^-$ sind und die positive Elektrode NaX oder ein Gemisch aus NaX-Verbindungen umfasst, das bzw. die in einem Molverhältnis zu dem gemischten geschmolzenen positiven Salzelektrolyten im Bereich von 1:1 bis 3:1 von NaX : $NaAlX'_{4-\delta}X''_{\delta}$ vorhanden ist bzw. sind.

2. Sekundärzelle nach Anspruch 1, wobei der geschmolzene positive Salzelektrolyt drei verschiedene $NaAlX_4$-Salze umfasst und durch die allgemeine Formel $NaAlX'_{4-\delta-\omega}X''_{\delta}X'''_{\omega}$ dargestellt wird, wobei X', X" und X''' drei verschiedene Halogene sind, ausgewählt aus Cl, Br und I, wobei $0 < \delta < 4$, $0 < \omega < 4$ und $0 < \delta + \omega < 4$;
und wobei die positive Elektrode NaX oder ein Gemisch aus NaX-Verbindungen umfasst, die in einem Molverhältnis zu dem gemischten geschmolzenen positiven Salzelektrolyten im Bereich von 1:1 bis 3:1 von NaX : $NaAlX'_{4-\delta-\omega}X''_{\delta}X'''_{\omega}$ vorhanden ist.

3. Sekundärzelle nach Anspruch 2, wobei die positive Elektrode und das geschmolzene positive Elektrolyt in der Form eines gemischten geschmolzenen Salzes vorliegen, umfassend mindestens drei Salze der Formel $NaAlC_4$, $NaAlBr_4$ und $NaAlI_4$ bei verschiedenen Molverhältnissen.

4. Sekundärzelle nach einem der vorhergehenden Ansprüche, wobei die Sekundärzelle bei einer Temperatur zwischen 80 °C und 210 °C arbeitet.

5. Sekundärzelle nach einem der vorhergehenden Ansprüche, wobei die Elektrolytmembran ein Material vom NaSICON-Typ umfasst.

6. Sekundärzelle nach Anspruch 1, wobei das zusätzliche NaX als eine feste Phase innerhalb der positiven Elektrode vorhanden ist.

7. Sekundärzelle nach einem der vorhergehenden Ansprüche, wobei die positive Elektrode einen Stromkollektor umfasst.

8. Sekundärzelle nach Anspruch 7, wobei die positive Elektrode einen Stromkollektor umfasst, der mindestens eines von Kohlenstoff, Wolfram, Molybdän und Titan umfasst.

9. Sekundärzelle nach Anspruch 7 oder Anspruch 8, wobei der Stromkollektor mindestens eines von Drähten, Filzen, Folien, Platten, parallelen Platten, Rohren, Netzen, Maschensieben und Schäumen umfasst.

10. Natrium-Halogen-Sekundärzelle nach einem der vorhergehenden Ansprüche, umfassend:

eine Kammer für eine negative Elektrode, umfassend eine negative Elektrode, die metallisches Natrium in geschmolzenem Zustand umfasst, wobei die negative Elektrode elektrochemisch oxidiert, um Natriumionen während der Entladung freizusetzen, und Natriumionen elektrochemisch reduziert, um Natriummetall während der Aufladung zu bilden;
eine positive Elektrode, umfassend NaI, welches in einem gemischten geschmolzenen positiven Elektrolyt angeordnet ist, umfassend mindestens zwei verschiedene $NaAlX_4$-Salze, und dargestellt durch die allgemeine Formel $NaAlX'_{4-\delta}X''_{\delta}$, wobei $0 < \delta < 4$, wobei X' und X" unterschiedliche Halogene sind, ausgewählt aus Cl, Br und I;
und eine Natriumion-leitende feste Elektrolytmembran, die die negative Elektrode von der flüssigen Lösung der positiven Elektrode trennt;
wobei die gesamten Batteriebestandteile der Natrium-Halogen-Sekundärzelle $2Na + I_2 \leftrightarrow 2Na^+ + 2I^-$ sind;

und die positive Elektrode NaI umfasst, das in einem Molverhältnis zu dem gemischten geschmolzenen positiven Salzelektrolyten im Bereich von 1:1 bis 3:1 von NaI : $NaAlX'_{4-\delta}X''_{\delta}$ vorhanden ist.

## Revendications

1. Cellule secondaire au sodium-halogène, comprenant :

un compartiment d'électrode négative comprenant une électrode négative qui comprend du sodium métallique à l'état solide ou fondu, ladite électrode négative s'oxydant électrochimiquement pour libérer des ions sodium pendant la décharge et réduisant électrochimiquement les ions sodium pour former du métal de sodium pendant la recharge ;
une électrode positive comprenant du NaX disposé dans un électrolyte positif fondu mixte comprenant au moins deux sels $NaAlX_4$ différents et représenté par la formule générale $NaAlX'_{4-\delta}X''_{\delta}$, où $0 < \delta < 4$, dans laquelle X' et X" représentent des halogènes différents choisis parmi Cl, Br et I ; et
une membrane électrolytique solide conductrice d'ions sodium qui sépare l'électrode négative de la solution d'électrode positive liquide ;

dans laquelle,

la chimie de batterie globale de la cellule secondaire au sodium-halogène est $2Na + X_2 \leftrightarrow 2Na^+ + 2X^-$ et l'électrode positive comprend NaX ou un mélange de composés NaX présents dans un rapport molaire sur

l'électrolyte positif de sel fondu mixte allant de 1:1 à 3:1 de $NaX:NaAlX'_{4-\delta}X''_{\delta}$.

**2.** Cellule secondaire selon la revendication 1, ledit électrolyte positif de sel fondu comprenant trois sels $NaAlX_4$ différents et étant représenté par la formule générale $NaAlX'_{4-\delta-\omega}X''_{\delta}X'''_{\omega}$, où X', X" et X''' représentent trois halogènes différents choisis parmi Cl, Br et I, où $0 < \delta < 4$, $0 < \omega < 4$, et $0 < \delta + \omega < 4$ ; et
ladite électrode positive comprenant NaX ou un mélange de composés NaX présents dans un rapport molaire sur l'électrolyte positif de sel fondu mixte allant de 1:1 à 3:1 de $NaX:NaAlX'_{4-\delta-\omega}X''_{\delta}X'''_{\omega}$.

**3.** Cellule secondaire selon la revendication 2, ladite électrode positive et ledit électrolyte positif fondu se présentant sous la forme d'un sel fondu mixte comprenant au moins trois sels de formule $NaAlCl_4$, $NaAlBr_4$ et $NaAlI_4$, à divers rapports molaires.

**4.** Cellule secondaire selon l'une quelconque des revendications précédentes, ladite cellule secondaire fonctionnant à une température comprise entre 80°C et 210°C.

**5.** Cellule secondaire selon l'une quelconque des revendications précédentes, ladite membrane électrolytique comprenant un matériau de type NaSICON.

**6.** Cellule secondaire selon la revendication 1, ledit NaX supplémentaire étant présent sous la forme d'une phase solide au sein de l'électrode positive.

**7.** Cellule secondaire selon l'une quelconque des revendications précédentes, ladite électrode positive comprenant un collecteur de courant.

**8.** Cellule secondaire selon la revendication 7, ladite électrode positive comprenant un collecteur de courant comprenant au moins un élément parmi le carbone, le tungstène, le molybdène et le titane.

**9.** Cellule secondaire selon la revendication 7 ou 8, ledit collecteur de courant comprenant au moins l'un de fils, de feutres, de feuilles, des plaques, de plaques parallèles, de tubes, de mailles, de tamis à mailles, et de mousses.

**10.** Cellule secondaire au sodium-halogène selon l'une quelconque des revendications précédentes, comprenant :

un compartiment d'électrode négative comprenant une électrode négative qui comprend du sodium métallique à l'état fondu, ladite électrode négative s'oxydant électrochimiquement pour libérer des ions sodium pendant la décharge et réduisant électrochimiquement les ions sodium pour former du métal de sodium pendant la recharge ;
une électrode positive comprenant du NaI disposé dans un électrolyte positif fondu mixte comprenant au moins deux sels $NaAlX_4$ différents et représenté par la formule générale $NaAlX'_{4-\delta}X''_{\delta}$, où $0 < \delta < 4$, dans laquelle X' et X" représentent des halogènes différents choisis parmi Cl, Br et I ; et
une membrane électrolytique solide conductrice d'ions sodium qui sépare l'électrode négative de la solution d'électrode positive liquide ;
ladite chimie de batterie globale de la cellule secondaire au sodium-halogène étant $2Na + I_2 \leftrightarrow 2Na^+ + 2I^-$, et l'électrode positive comprenant NaI présent dans un rapport molaire sur l'électrolyte positif de sel fondu mixte allant de 1:1 à 3:1 de $NaI:NaAlX'_{4-\delta}X''_{\delta}$.

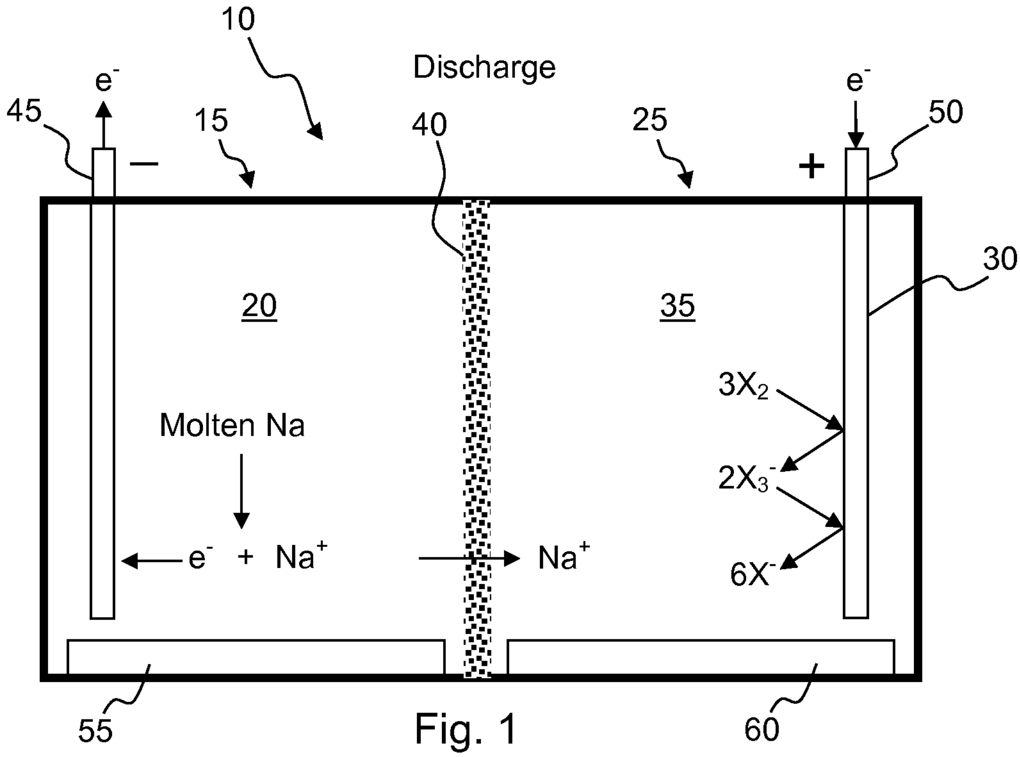
10
Discharge
e-
45
15
40
25
50
e-
30
20
35
Molten Na
3X2
2X3-
e- + Na+
Na+
6X-
55
60

Fig. 1

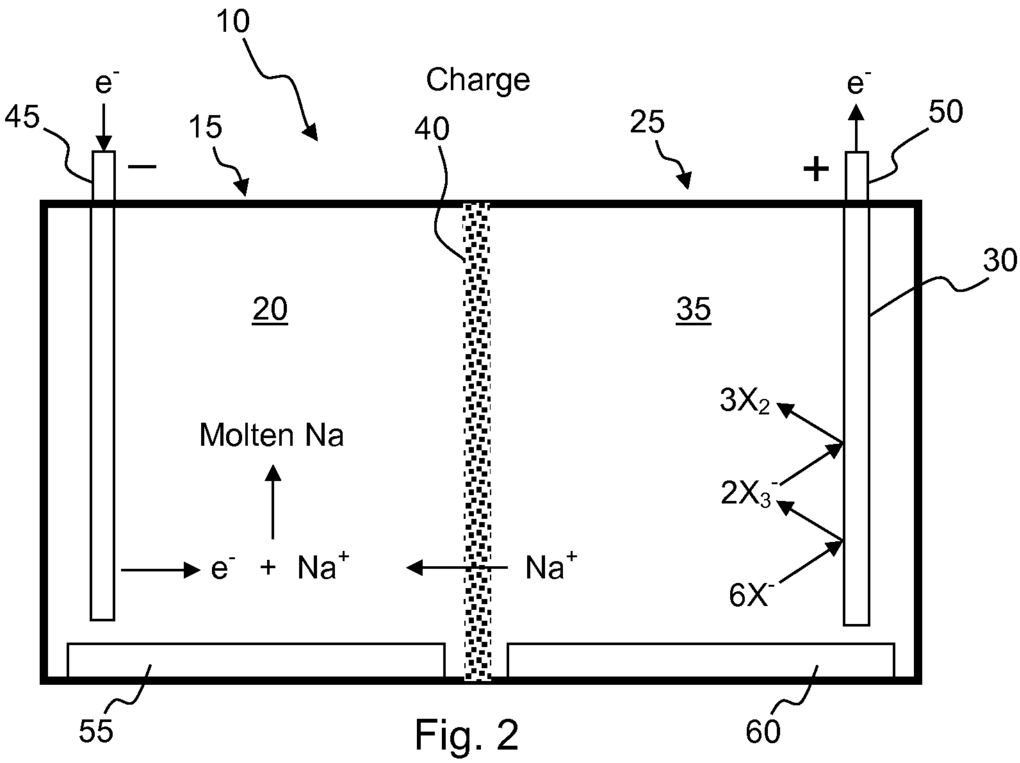
10
Charge
e-
45
15
40
25
50
e-
30
20
35
3X2
Molten Na
2X3-
e- + Na+
Na+
6X-
55
60

Fig. 2

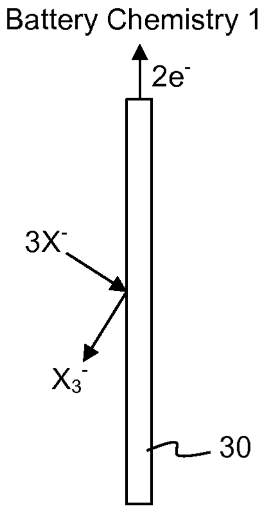
Battery Chemistry 1
2e-
3X-
X3-
30

Fig. 3A

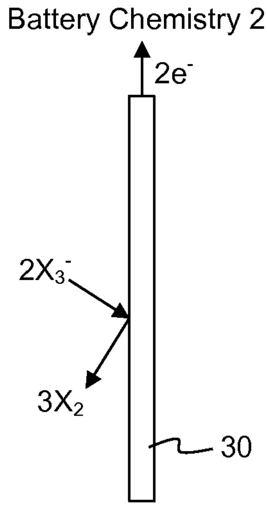
Battery Chemistry 2
2e-
2X3-
3X2
30

Fig. 3B

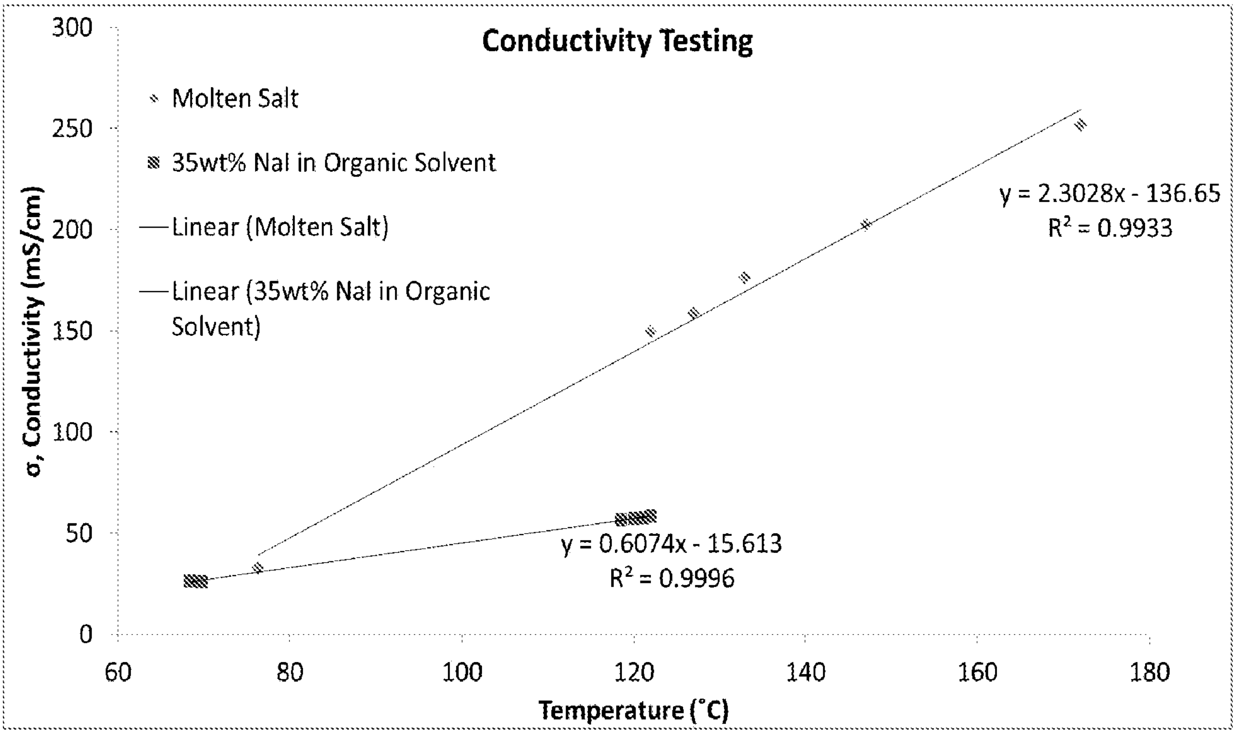
Conductivity Testing
Molten Salt
35wt% NaI in Organic Solvent
Linear (Molten Salt)
Linear (35wt% NaI in Organic Solvent)
y = 2.3028x - 136.65
R² = 0.9933
y = 0.6074x - 15.613
R² = 0.9996
σ, Conductivity (mS/cm)
300
250
200
150
100
50
0
60
80
100
120
140
160
180
Temperature (°C)

Fig. 4

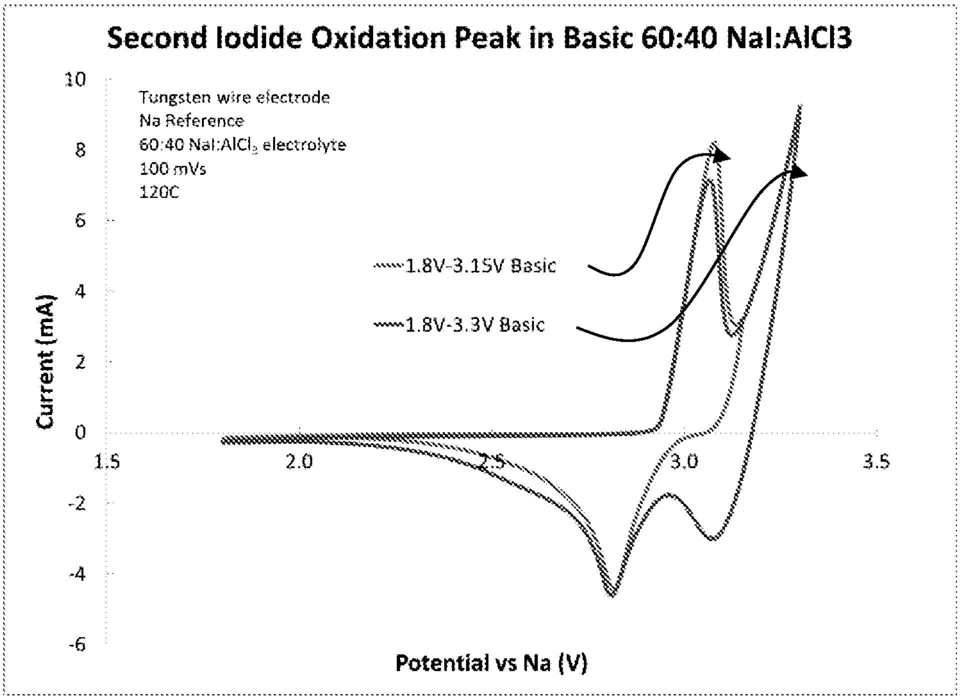
Second Iodide Oxidation Peak in Basic 60:40 NaI:AlCl3
Tungsten wire electrode
Na Reference
60:40 NaI:AlCl$_3$ electrolyte
100 mVs
120C
1.8V-3.15V Basic
1.8V-3.3V Basic
Current (mA)
Potential vs Na (V)
10
8
6
4
2
0
-2
-4
-6
1.5
2.0
2.5
3.0
3.5

Fig. 5A

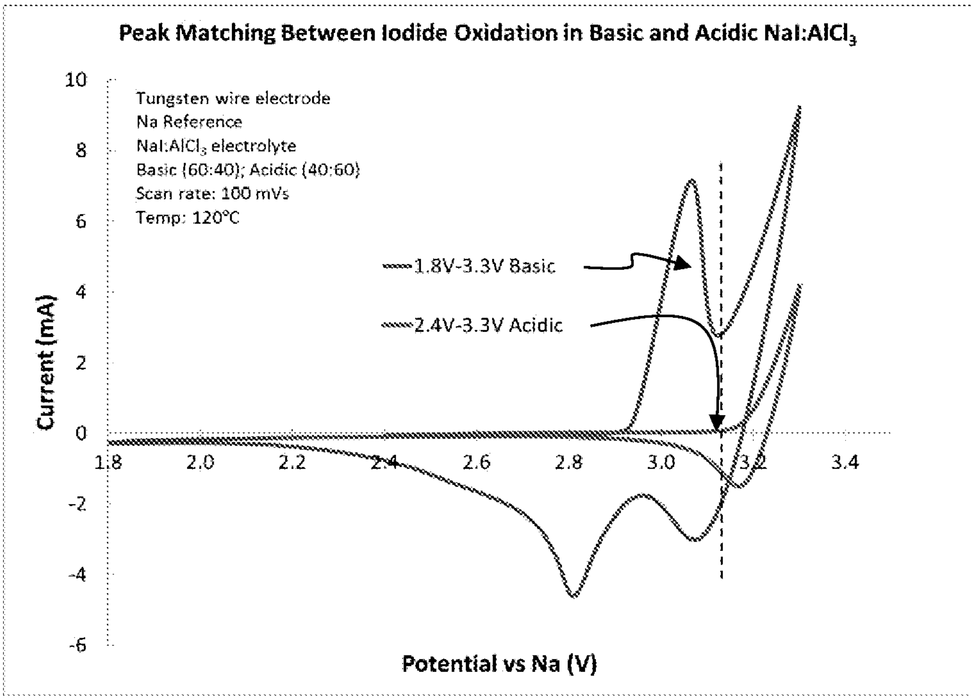
Peak Matching Between Iodide Oxidation in Basic and Acidic NaI:AlCl$_3$
Tungsten wire electrode
Na Reference
NaI:AlCl$_3$ electrolyte
Basic (60:40); Acidic (40:60)
Scan rate: 100 mVs
Temp: 120°C
1.8V-3.3V Basic
2.4V-3.3V Acidic
Current (mA)
Potential vs Na (V)
10
8
6
4
2
0
-2
-4
-6
1.8
2.0
2.2
2.4
2.6
2.8
3.0
3.2
3.4

Fig. 5B

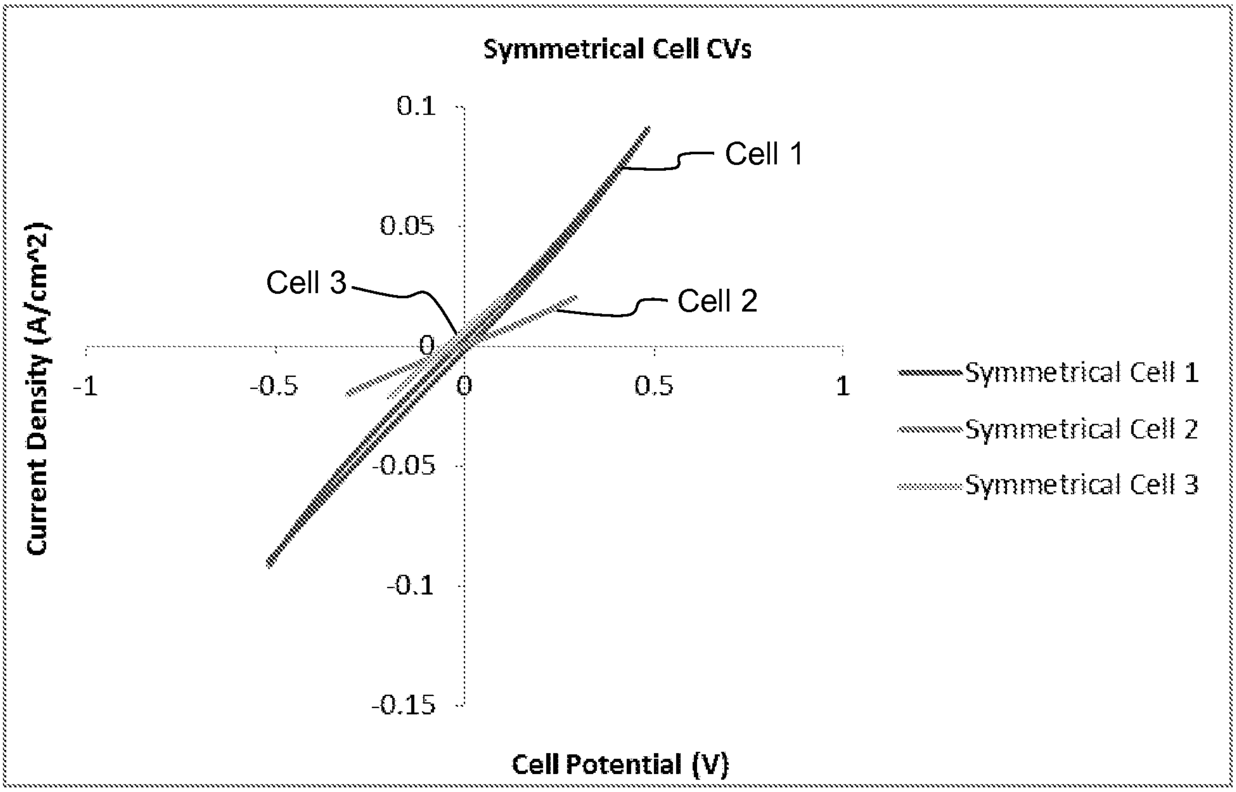
Symmetrical Cell CVs
Current Density (A/cm^2)
0.1
0.05
0
-0.05
-0.1
-0.15
-1
-0.5
0
0.5
1
Cell 1
Cell 2
Cell 3
Symmetrical Cell 1
Symmetrical Cell 2
Symmetrical Cell 3
Cell Potential (V)

Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- FR 2115522
- US 4546055 A
- US 2014030571 A
- US 3877984 A
- US 019651 A
- US 20140065456 A